# EUROPÄISCHE PATENTSCHRIFT

(11) **EP 3 122 016 B1**
(45) Veröffentlichungstag und Bekanntmachung des Hinweises auf die Patenterteilung: **08.01.2020**
(21) Anmeldenummer: 15177824.8
(22) Anmeldetag: 22.07.2015
(51) Int. Cl.: H04L 29/06

(54) **AUTOMATISIERUNGSNETZWERK UND VERFAHREN ZUR ÜBERWACHUNG DER SICHERHEIT DER ÜBERTRAGUNG VON DATENPAKETEN**
AUTOMATION NETWORK AND METHOD OF SURVEILLANCE FOR SECURITY OF THE TRANSMISSION OF DATA PACKETS
RESEAU D'AUTOMATISATION ET PROCEDE DE SURVEILLANCE DE LA SECURITE DE LA TRANSMISSION DE PAQUETS DE DONNEES

(43) Veröffentlichungstag der Anmeldung: 25.01.2017
(73) Patentinhaber: Siemens Aktiengesellschaft, 80333 München (DE)
(72) Erfinder: Palmin, Anna, 76187 Karlsruhe (DE)

(56) Entgegenhaltungen:
- WO-A1-2005/015370
- GREENWALD M ET AL: "Designing an academic firewall: policy, practice, and experience with SURF", NETWORK AND DISTRIBUTED SYSTEM SECURITY, 1996., PROCEEDINGS OF THE SYM POSIUM ON SAN DIEGO, CA, USA 22-23 FEB. 1996, LOS ALAMITOS, CA, USA,IEEE COMPUT. SOC, US, 22. Februar 1996 (1996-02-22), Seiten 79-92, XP010158987, DOI: 10.1109/NDSS.1996.492415 ISBN: 978-0-8186-7222-4
- ANNA PALMIN ET AL: "Ganzheitliches anlagenweites Security Management - Werkzeuge fuer die automatisierte Unterstuetzung", ATP EDITION, DIV DEUTSCHER INDUSTRIEVERLAG GMBH, DE , Bd. 54, Nr. 3 1. Januar 2012 (2012-01-01), Seiten 34-40, XP008170537, ISSN: 2190-4111 Gefunden im Internet: URL:https://www.di-verlag.de/de/Zeitschrif ten/atp-edition/2012/03/Ganzheitliches-anl agenweites-Security-Management

## Beschreibung

Die Erfindung betrifft ein Automatisierungsnetzwerk zur Überwachung der Sicherheit der Übertragung von Datenpaketen, umfassend zumindest ein erstes Datenverarbeitungsmittel, welches zur Übertragung von Datenpaketen aus einer Anlagenkomponente und in eine Anlagenkomponente vorgesehen ist und ein zweites Datenverarbeitungsmittel, wobei zumindest das erste Datenverarbeitungsmittel mit dem zweiten Datenverarbeitungsmittel bidirektional zur Übertragung der Datenpakete miteinander verbunden ist, wobei bei Übersendung eines Datenpakets vom ersten Datenverarbeitungsmittel an das zweite Datenverar-beitungsmittel diese vom zweiten Datenverarbeitungsmittel erfasst und Response-Pakete generiert werden, welche vom zweiten Datenverarbeitungsmittel an das ersten Datenverarbeitungsmittel zurückgesendet werden. Weiterhin betrifft die Erfindung ein Verfahren zur Überwachung der Sicherheit der Übertragung von Datenpaketen.

Industrielle Automatisierungsnetzwerke bestehen aus Sicht der Datenverarbeitung aus einem Datennetzwerk sowie aus Datenverarbeitungsmitteln, welche zur Durchführung einer Datenkommunikation durch das Datennetzwerk miteinander verbunden sind. Automatisierungsnetzwerke können, z. B. um eine Bedienung einer durch das Automatisierungsnetzwerk automatisierten industriellen Anlage von einer entfernten Station zu ermöglichen, beispielsweise mittels eines Gateways an ein öffentliches Netzwerk, z. B Internet, angebunden sein. Diverse Vorteile bei der Realisierung moderner Automatisierungsnetzwerke führen zum verstärkten Einsatz von IT-Technologien wie Ethernet und dem Internet Protocol (IP). Das führt jedoch zu einer Erhöhung der Sicherheitsrisiken, beispielsweise durch unberechtigte Eingriffe von außen in das jeweilige Automatisierungsnetzwerk.

Unter dem Begriff Automatisierungsnetzwerke sollen nachfolgend Automatisierungssysteme, Steuerungsanlagen, Produktionsanlagen, Fertigungsanlagen oder dergleichen verstanden werden. Die Automatisierungsgeräte der Automatisierungsanlage können dazu ausgebildet sein, eine Rechenaufgabe durchzuführen. Zu diesem Zweck können die Automatisierungsgeräte eine Recheneinrichtung, beispielsweise einen Prozessor (CPU), umfassen. Des Weiteren können die Automatisierungsgeräte Ein- /Ausgabeeinrichtungen umfassen, die Prozessgrößen erfassen können und entsprechende Stellsignale ausgeben können.

In dem Aufsatz "Ganzheitliches anlagenweites Security Management - Werkzeuge für die automatisierte Unterstützung", von Anna Palmin, Stefan Runde und Pierre Kobes, veröffentlicht in atp, März 2012, Seiten 34 bis 40, sind Maßnahmen zur Verbesserung der Sicherheit in industriellen Automatisierungsnetzwerken beschrieben. Eine der wesentlichen Maßnahmen im Rahmen eines ganzheitlichen Security Managements ist die Erfassung und Auswertung von Meldungen, die verschiedene Komponenten des Automatisierungsnetzwerks bei Ereignissen erzeugen und die möglicherweise einen Angriff erkennen lassen. Eine übergeordnete Einheit sammelt die Meldungen und wertet diese aus, um aus den gemeldeten Einzelereignissen oder einer Zusammensetzung mehrere Ereignisse zu erkennen, ob ein Angriff tatsächlich stattfindet, und ggf. diesen an eine Stelle zu melden, damit geeignete Maßnahmen als Reaktion auf den erkannten Angriff eingeleitet werden können. Diese Funktionalität wird als Security Event Management (SEM) bezeichnet. Eine weitere Funktionalität betrifft die Erzeugung von Berichten, um das Einhalten von Richtlinien nachzuweisen. Diese wird als Security Information Management (SIM) bezeichnet. Vereint eine Einheit die beiden genannten Funktionalitäten, so wird sie als Security Information und Event Management (SIEM) bezeichnet. Eine Recheneinheit mit einem Software-Werkzeug, welches in einem Automatisierungsnetzwerk zur Realisierung eines SIEM dient, wird in dem oben genannten Aufsatz als Security Station vorgestellt. Die Security Station ist strukturell in ein Prozessleitsystem (PLS) eingeordnet. Eine Operator Station sowie die Security Station können gemeinsam auf einem Personal Computer (PC) oder auf zwei separaten PCs laufen. Die Security Station kann ebenso auf einer bereits vorhandenen Maintenance Station realisiert sein. Sie dient dazu, das Security Management in das Prozessleitsystem zu integrieren und parallel zur Anlagenautomatisierung laufen zu lassen. So werden die vorhandenen Sichten wie z. B. Betriebs-Sicht und Maintenance-Sicht um eine zusätzliche integrierte Security-Sicht auf die Anlage ergänzt. Zudem lässt sich das in dem Automatisierungsnetzwerk vorhandene Melde- und Archivierungssystem nutzen, um die zu sicherheitsrelevanten Ereignissen erzeugten Meldungen zu verarbeiten. Alternativ zu einem integrierten Software-Werkzeug ist die Security Station als Werkzeug realisierbar, welches unabhängig von spezifischen Produkten ist und klar definierte Schnittstellen besitzt. Somit ist es flexibel im Kontext von PLS und SCADA-Systemen (Supervisory Control and Data Acquisition) einsetzbar. Das Software-Werkzeug der Security Station dient zur Überwachung der Sicherheit in dem Automatisierungsnetzwerk, und zwar anhand einer Erfassung und Auswertung von Meldungen, welche eine Bedieneinheit, häufig als Operator Station bezeichnet, eine speicherprogrammierbare Steuerung, ein sogenannter Controller, Netzwerkkomponenten, z. B. Router, Switches oder Gateways, oder Feldgeräte, z. B. Stellglieder oder Messumformer für Druck, Temperatur oder Durchfluss, erzeugen. Diese Geräte werden hier verallgemeinert als Datenverarbeitungsmitteln oder kurz als Event-Quellen bezeichnet und erzeugen aufgrund ihrer entsprechenden Vorkonfigurierung bei sicherheitsrelevanten Ereignissen entsprechende Meldungen. Beispiele für sicherheitsrelevante Ereignisse sind ein erkannter fehlgeschlagener Anmeldeversuch an einem PC, der im Windows Event Log erfasst wird, oder ein erkannter unberechtigter Zugriff auf eine IP-Adresse, der durch eine Firewall abgewehrt und ggf. in eine Logdatei geschrieben wird. In sogenannten Konnektoren des SIEM-Systems wird eine Normalisierung der gemeldeten Ereignisse vorgenommen. Die Normalisierung wird in der Regel als Abbildung von einzelnen Bestandteilen bzw. Parametern auf die Datenstruktur des SIEM realisiert.

Ein SIEM-System wird in der Regel in der Engineering-Phase, d. h. bei der Projektierung und der Inbetriebsetzung einer automatisierungstechnischen Anlage, konfiguriert. Die Konfiguration umfasst u. a. die Anbindung von Datenverarbeitungsmittelen, welche als Quellen für Meldungen sicherheitsrelevanter Ereignisse in Frage kommen, an ein SIEM-System unter Verwendung der entsprechenden Konnektoren. Dabei wird angestrebt, dass das SIEM-System mit keinen Quellen von Ereignismeldungen, die ihm unbekannt sind, kommuniziert, da dies die Zuverlässigkeit der Sicherheitsüberwachung beeinträchtigen könnte. Ebenso ist dafür zu sorgen, dass bei sicherheitsrelevanten Ereignissen durch das betroffene Datenverarbeitungsmittel tatsächlich entsprechende Meldungen erzeugt werden. Das primäre Ziel eines in einer Automatisierungsanlage eingesetzten SIEM-Systems besteht in der zeitnahen Erkennung und Auswertung von Hinweisen auf Angriffsversuche oder auf Abweichungen vom Normalzustand. Durch das SIEM-System soll es ermöglicht werden, auf Angriffsversuche und Abnormalitäten zeitnah und angemessen zu reagieren, sowie in der Langzeitspeicherung von security-relevanten Informationen und der Generierung von Berichten.

Aus dem Artikel "Designing an academic firewall: policy, practice and experience with SURF", von M. Greenwald et al., Network and distributed system security, 1996, proceedings of the symposium on San Diego, CA, USA, 22.-23. Februar 1996, Seiten 79-92, ISBN 978-0-8186-7222-4 ist ein Netzwerk mit einer Firewall bekannt, wobei eine Transmission Control Protocol (TCP)-Verbindung gemäß einem Drei-Wege-Handschlag (englisch "Three-Way-Handshake") zustande kommt.

Der Erfindung liegt daher die Aufgabe zugrunde, eine Automatisierungsnetzwerk und ein Verfahren anzugeben, welches die Qualität und/oder Zuverlässigkeit der Erkennung von Hinweisen auf Angriffsversuche oder auf Abweichungen vom Normalzustand in einem Automatisierungsnetzwerk verbessert. Die auf das Automatisierungsnetzwerk bezogene Aufgabe wird gelöst durch die Angabe eines Automatisierungsnetzwerk zur Überwachung der Sicherheit der Übertragung von Datenpaketen, umfassend zumindest ein erstes Datenverarbeitungsmittel, welches zur Übertragung von Datenpaketen aus einer Anlagenkomponente und in eine Anlagenkomponente vorgesehen ist und ein zweites Datenverarbeitungsmittel, wobei zumindest das erstes Datenverarbeitungsmittel mit dem zweiten Datenverarbeitungsmittel bidirektional zur Übertragung der Datenpaketen miteinander verbunden ist, wobei bei Übersendung eines Datenpakets vom ersten Datenverarbeitungsmittel an das zweite Datenverarbeitungsmittel dieses vom zweiten Datenverarbeitungsmittel erfasst und Response-Pakete generiert werden, welche vom zweiten Datenverarbeitungsmittel an das ersten Datenverarbeitungsmittel zurückgesendet werden, wobei das erste Datenverarbeitungsmittel ein Response-Filter umfasst, mit welchen eine Prüfung und anschließende Ablehnung/Annahme der Response-Pakete durchführbar ist, wobei bei Ablehnung eines Response-Paketes die Ausgabe eines Warnsignals auf einem Servicegerät erfolgt.

Die auf das Verfahren bezogene Aufgabe wird gelöst durch die Angabe eines Verfahrens zur Überwachung der Sicherheit der Übertragung von Datenpaketen in einem Automatisierungsnetzwerk, mit zumindest einem ersten Datenverarbeitungsmittel, welches zur Übertragung von Datenpaketen aus einer Anlagenkomponente und in eine Anlagenkomponente verwendet wird und mit einem zweiten Datenverarbeitungsmittel, wobei zumindest das erste Datenverarbeitungsmittel mit dem zweiten Datenverarbeitungsmittel bidirektional zur Übertragung der Datenpaketen miteinander verbunden werden, wobei bei Übersendung eines Datenpakets vom ersten Datenverarbeitungsmittel an das zweite Datenverarbeitungsmittel diese vom zweiten Datenverarbeitungsmittel erfasst und Response-Pakete generiert wer-den, welche vom zweiten Datenverarbeitungsmittel an das ersten Datenverarbeitungsmittel zurückgesendet werden, wobei eine Prüfung und anschließende Ablehnung/Annahme der Response-Pakete durch einen im ersten Datenverarbeitungsmittel vorgesehenen Response-Filter vorgenommen wird, so dass eine rückwirkungsfreie Übersendung ermöglicht wird.

Erfindungsgemäß wurde erkannt, dass die Kommunikation des ersten Datenverarbeitungsmittels der Anlagenkomponenten und - systeme mit einem zweiten Datenverarbeitungsmittel nicht unidirektional sondern bidirektional ist. Das zweite Datenverarbeitungsmittel sendet gemäß dem TCP-Protokoll Response-Werte an die Komponenten und Systeme zurück. Werden zwischen dem ersten Datenverarbeitungsmittel der Anlagenkomponenten und dem zweiten Datenverarbeitungsmittel Firewalls eingesetzt, so wird in der Regel die gesamte TCP-basierte Kommunikation durch das Öffnen des entsprechenden Ports durchgelassen.

Erfindungsgemäß wird nun ein Response-Filter im ersten Datenverarbeitungsmittel der Anlagenkomponente integriert. Dieser prüft die Pakete des zweiten Datenverarbeitungsmittels, z.B. eines Syslog- oder SIEM-Servers genau und akzeptiert lediglich ausgewählte Pakete als erlaubte Pakete. Alle weiteren Pakete werden von dem ersten Datenverarbeitungsmittel der betroffenen Anlagenkomponenten abgelehnt. Durch diesen integrierten Response-Filter wird eine rückwirkungsfreie Übertragung von Security-Events und weiteren Informationen aus den ersten Datenverarbeitungsmittel der Anlagenkomponenten bzw. Anlagensystemen an den zweiten Datenverarbeitungsmittel garantiert. Die Übertragung von Security-Events vom ersten Datenverarbeitungsmitteln der verschiedenen Anlagenkomponenten und -systemen an ein in der Anlage eingesetztes zweiten Datenverarbeitungsmittel beeinflusst das Schutzniveau und die Verfügbarkeit einer Anlage nicht negativ, d.h. die Übertragung erfolgt rückwirkungsfrei. Zudem ist vorteilhafterweise die Rückwirkungsfreiheit der Übertragung von Security-Events und weiteren Informationen nachweisbar und somit garantiert. Zwecks der Sicherstellung eines umfassenden Schutzes der Anlage gegen unberechtigte Zugriffe und einer höchst möglichen Anlagenverfügbarkeit ist die geforderte nachweisbare Rückwirkungsfreiheit der Datenübertragung vom zweiten Datenverarbeitungsmittel von hoher Bedeutung.

Bezüglich des Warnsignals wird eine entsprechende Meldung generiert, die je nach vorgenommener Konfiguration z.B. an ein Prozessleit- bzw. ein SCADA-System oder per SMS an einen Verantwortlichen (z.B. den Anlagenbediener, den Administrator oder einen IT -Experten) gesendet wird und ihn darüber informiert, dass das erste Datenverarbeitungsmittel in der Anlagenkomponente einen unerlaubten Response-Wert vom zweiten Datenverar-beitungsmittel erhalten hat. Diese Information ist sehr wichtig, denn dadurch wird signalisiert, dass das eingesetzte zweite Datenverarbeitungsmittel z.B. ein SIEM- bzw. Syslog-Server ggf. nicht vertrauenswürdig ist.

In den Unteransprüchen sind weitere vorteilhafte Maßnahmen aufgelistet, die beliebig miteinander kombiniert werden können, um weitere Vorteile zu erzielen.

Bevorzugt umfasst das zweite Datenverarbeitungsmittel zur Kommunikation mit dem ersten Datenverarbeitungsmittel einen Server. Dieser kann als Syslog-Server oder Syslog-ng-Server oder Rsyslog-Server ausgestaltet sein. Auch kann der Server als ein SIEM-Server ausgestaltet sein. Selbstverständlich können auch andere Server verwendet werden. Bevorzugt umfasst das erste Datenverarbeitungsmittel zur Kommunikation mit dem zweiten Datenverarbeitungsmittel einen TCP-basierten Client. Zudem kann der TCP-basierte Client einen Protokollstack umfassen, wobei der Response-Filter im Protokollstack vorgesehen ist.

Bevorzugt sind angenommene Response-Pakete zumindest als Synchronisations-Pakete und/oder Finish-Pakete und/oder Acknowlegement-Pakete ausgestaltet. Auch andere Response-Pakete können jedoch angenommen werden. Alle weiteren Pakete werden bevorzugt von den ersten Datenverarbeitungsmittel der betroffenen Anlagenkomponenten abgelehnt. In diesem Fall entfällt die Bestätigung des Paketes.

Bevorzugt sind die Datenpakete Security-Events, z.B. Ereignis, Bedrohungs- sowie Risikodaten.

Auch kann zur Erhöhung der Sicherheit zumindest im ersten Datenverarbeitungsmittel eine Firewall zur Überprüfung der Datenpakete vorgesehen sein.

Vorteilhafterweise ist der Response-Filter stets aktiv. Der dadurch gewährleistete Schutz kann somit weder absichtlich noch aus Versehen ausgehebelt werden. Dies hat insbesondere gegenüber der durch den Einsatz der Firewalls realisierbaren Filterung von Datenpaketen den Vorteil, dass der erfindungsgemäße integrierte Response-Filter viel gezielter, aufwands-, konfigurationsarmer sowie viel zuverlässiger ist, da. z.B. eine Firewall ggf. versehentlich oder böswillig manipuliert werden kann.

Weitere Merkmale, Eigenschaften und Vorteile der vorliegenden Erfindung ergeben sich aus der nachfolgenden, beispielhaften Beschreibung unter Bezugnahme auf die beiliegenden Figuren. Darin zeigen schematisch:
- FIG 1:: Übertragung von Security-Events und weiteren Informationen nach dem Stand der Technik,
- FIG 2:: Rückwirkungsfreie Übertragung von Security-Events und weiteren Informationen durch die integrierte Response-Filterung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

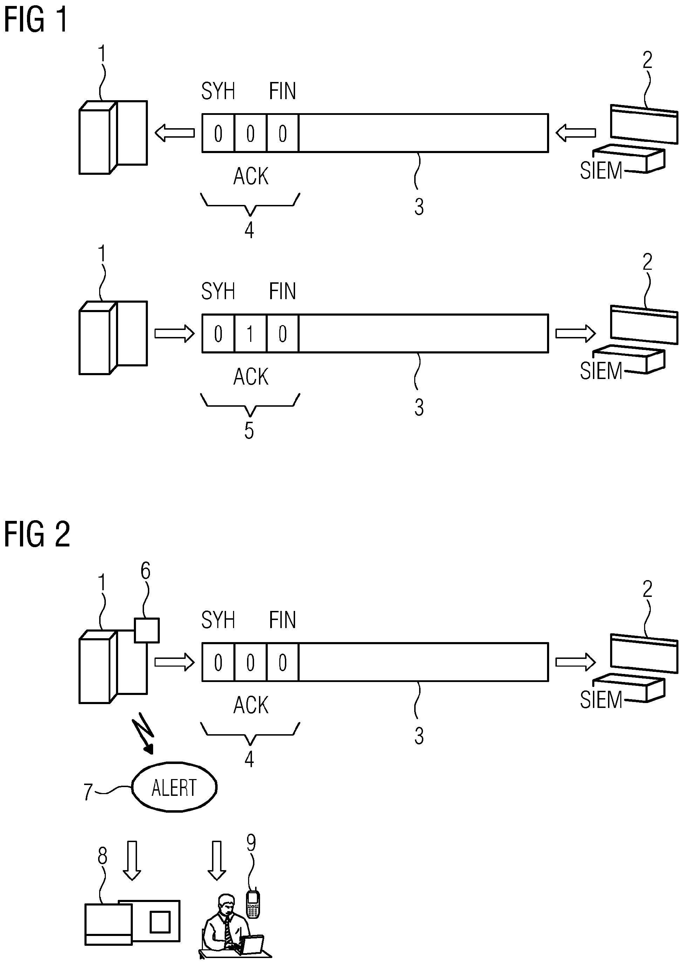

FIG 1 zeigt eine TCP-basierte Syslog-Version, welche aufgrund der durch die Quittierung des Empfangs der Pakete sichergestellten Zuverlässigkeit gegenüber der UDP-basierten Version bevorzugt wird. Dies hat zur Folge, dass die Kommunikation des ersten Datenverarbeitungsmittels 1 der Anlagenkomponenten mit einem SIEM-Server oder ein Syslog-Server 2 nicht unidirektional sondern bidirektional 3 ist. Denn der SIEM- bzw. der Syslog-Server 2 sendet gemäß dem TCP-Protokoll zumindest die Synchronisations-, Finish-Pakete und Acknowledgements 4 als Response-Werte an das ersten Datenverarbeitungsmittel 1 der Anlagenkomponenten zurück, welche eine Bestätigung, nämlich die sog. Response-Pakte 5 vom ersten Datenverarbeitungsmittel 1 erhalten. Werden zwischen den Anlagenkomponenten und -systemen Firewalls eingesetzt, so wird in der Regel die gesamte TCP-basierte Kommunikation durch das Öffnen des entsprechenden Ports durchgelassen. Zudem können durch den Einsatz von Firewalls zwecks der Filterung der Kommunikation zwischen dem ersten Datenverarbeitungsmittel 1 der Anlagenkomponenten/-systemen und dem Syslog-/ SIEM-Server 2 hohe zusätzliche Kosten, ein hoher Aufwand für die Konfiguration und das Monitoring der Firewalls sowie ggf. ein negativer Einfluss auf die Performance verursacht werden. Ferner besteht im Hinblick auf Security das Risiko, dass die eingesetzte Firewall vorsätzlich oder versehentlich manipuliert wird, was z.B. die Deaktivierung der Filterung und/oder die Deaktivierung der Meldungen oder das Versenden von Fehlalarmen zur Folge haben kann.

Dies wird durch die Erfindung nun gelöst. FIG 2 zeigt eine rückwirkungsfreie Übertragung von Security-Events und weiteren Informationen durch die integrierte Response-Filterung. Bei der Nutzung vom TCP-basierten Syslog zur Übertragung von Security-Events und weiteren Informationen aus den Automatisierungskomponenten und -systemen an einen Syslog- oder SIEM-Server 2 wird in dem in den ersten Datenverarbeitungsmittel 1 implementierten TCP ein Response-Filter 6 integriert. Er prüft den vom Syslog- bzw. SIEM-Server 2 erhaltenen Response-Wert genau und akzeptiert lediglich die Synchronisations-, Finish-Pakete sowie Acknowledgements 4, d.h. nur die Pakete mit dem gesetzten SYN-, ACK- oder FIN-Flag als erlaubte Response-Werte.

Alle weiteren Pakete werden von den betroffenen Anlagenkomponenten bzw. deren ersten Datenverarbeitungsmittel 1 abgelehnt. In diesem Fall entfällt die Bestätigung des Paketes. Zusätzlich wird eine entsprechende Meldung (Warnsignal 7) generiert, die je nach vorgenommener Konfiguration z.B. an ein Prozessleit- bzw. ein SCADA-System 8 oder per SMS 9 an einen Verantwortlichen (z.B. den Anlagenbediener, den Administrator oder einen IT -Experten) gesendet wird und die ihn darüber informiert, dass die betreffende Anlagenkomponente einen unerlaubten Response-Wert vom Syslog-Server oder SIEM-Server 2 erhalten hat. Diese Information ist sehr wichtig, denn dadurch wird signalisiert, dass der eingesetzte SIEM-Server 2 bzw. Syslog-Server nicht vertrauenswürdig ist. Durch diesen integrierten Response-Filter 6 wird eine rückwirkungsfreie Übertragung von Security-Events und weiteren Informationen aus den ersten Datenverarbeitungsmittel 1 der Anlagenkomponenten an den Syslog-Server oder SIEM-Server 2 garantiert. Der im TCP-Stack des ersten Datenverarbeitungsmittels 1 integrierte Response-Filter 6 kann stets aktiv sein, wodurch der dadurch gewährleistete Schutz somit weder absichtlich noch aus Versehen ausgehebelt werden kann.

Dadurch ergibt sich gegenüber der durch den Einsatz der Firewalls realisierbaren Filterung von Datenpaketen insbesondere der Vorteil, dass ein viel gezielterer, aufwands-, konfigurationsärmerer sowie viel zuverlässigerer Einsatz möglich ist. Dies ist insbesondere der Fall, da eine Firewall ggf. versehentlich oder böswillig manipuliert werden kann.

Ein weiterer Vorteil besteht in der einfachen Nachweisbarkeit. Sie erfolgt anhand von Meldungen, die im Falle eines erkannten "unerlaubten" Response-Wertes generierten und an ein Prozessleit- bzw. ein SCADA-System 8 oder per SMS 9 an einen Verantwortlichen z.B. den Anlagenbediener, den Administrator oder einen IT-Experten gesendeten Meldungen.

## Patentansprüche

1. Automatisierungsnetzwerk zur Überwachung der Sicherheit der Übertragung von Datenpaketen, umfassend zumindest ein erstes Datenverarbeitungsmittel (1), welches zur Übertragung von Datenpaketen aus einer Anlagenkomponente und in eine Anlagenkomponente vorgesehen ist und ein zweites Datenverarbeitungsmittel, wobei zumindest das erstes Datenverarbeitungsmittel (1) mit dem zweiten Datenverarbeitungsmittel bidirektional zur Übertragung der Datenpaketen miteinander verbunden ist, wobei bei Übersendung eines Datenpakets vom ersten Datenverarbeitungsmittel (1) an das zweite Datenverarbeitungsmittel dieses vom zweiten Datenverarbeitungsmittel erfasst und Response-Pakete (5) generiert werden, welche vom zweiten Datenverarbeitungsmittel an das ersten Datenverarbeitungsmittel (1) zurückgesendet werden,
wobei das erste Datenverarbeitungsmittel (1) einen Response-Filter (6) umfasst, mit welchen eine Prüfung und anschließende Ablehnung/Annahme der Response-Pakete (5) durchführbar ist,
wobei bei Ablehnung eines Response-Paketes (5) ein Warnsignal (7) zur Ausgabe auf einem Servicegerät generierbar ist.

2. Automatisierungsnetzwerk zur Überwachung der Sicherheit der Übertragung von Datenpaketen nach Anspruch 1,
**dadurch gekennzeichnet, dass** das zweite Datenverarbeitungsmittel zur Kommunikation mit dem ersten Datenverarbeitungsmittel (1) einen Server umfasst.

3. Automatisierungsnetzwerk zur Überwachung der Sicherheit der Übertragung von Datenpaketen nach Anspruch 2,
**dadurch gekennzeichnet, dass** der Server ein Syslog-Server oder ein Syslog-ng-Server oder ein Rsyslog-Server ist.

4. Automatisierungsnetzwerk zur Überwachung der Sicherheit der Übertragung von Datenpaketen nach Anspruch 2,
**dadurch gekennzeichnet, dass** der Server ein SIEM-Server (2) ist.

5. Automatisierungsnetzwerk zur Überwachung der Sicherheit der Übertragung von Datenpaketen nach einem der vorhergehenden Ansprüche,
**dadurch gekennzeichnet, dass** das erste Datenverarbeitungsmittel (1) zur Kommunikation mit dem zweiten Datenverarbeitungsmittel einen TCP-basierten Client umfasst.

6. Automatisierungsnetzwerk zur Überwachung der Sicherheit der Übertragung von Datenpaketen nach Anspruch 5,
**dadurch gekennzeichnet, dass** der TCP-basierte Client einen Protokollstack umfasst und der Response-Filter (6) im Protokollstack vorgesehen ist.

7. Automatisierungsnetzwerk zur Überwachung der Sicherheit der Übertragung von Datenpaketen nach einem der vorhergehenden Ansprüche,
**dadurch gekennzeichnet, dass** angenommene Response-Pakete (5) zumindest als Synchronisations-Pakete und/oder Finish-Pakete und/oder Acknowlegement-Pakete (4) ausgestaltet sind.

8. Automatisierungsnetzwerk zur Überwachung der Sicherheit der Übertragung von Datenpaketen nach einem der vorhergehenden Ansprüche,
**dadurch gekennzeichnet, dass** die Datenpakete Security-Events sind.

9. Automatisierungsnetzwerk zur Überwachung der Sicherheit der Übertragung von Datenpaketen nach einem der vorhergehenden Ansprüche,
**dadurch gekennzeichnet, dass** zumindest im ersten Datenverarbeitungsmittel (1) eine Firewall zur Überprüfung der Datenpakete vorgesehen ist.

10. Verfahren zur Überwachung der Sicherheit der Übertragung von Datenpaketen in einem Automatisierungsnetzwerk, mit zumindest einem ersten Datenverarbeitungsmittel (1), welches zur Übertragung von Datenpaketen aus einer und in eine Anlagenkomponente verwendet wird und mit einem zweiten Datenverarbeitungsmittel, wobei zumindest das erstes Datenverarbeitungsmittel (1) mit dem zweiten Datenverarbeitungsmittel bidirektional zur Übertragung der Datenpaketen miteinander verbunden werden, wobei bei Übersendung eines Datenpakets vom ersten Datenverarbeitungsmittel (1) an das zweite Datenverarbeitungsmittel diese vom zweiten Datenverarbeitungsmittel erfasst und Response-Pakete (5) generiert werden, welche vom zweiten Datenverarbeitungsmittel an das ersten Datenverarbeitungsmittel (1) zurückgesendet werden,
wobei eine Prüfung und anschließende Ablehnung/Annahme der Response-Pakete (5) durch einen im ersten Datenverarbeitungsmittel (1) vorgesehenen Response-Filter (6) vorgenommen wird, so dass eine rückwirkungsfreie Übersendung ermöglicht wird, wobei bei Ablehnung eines Response-Paketes ein Warnsignal (7) generiert wird, welches auf einem Servicegerät zur Anzeige gebracht wird.

11. Verfahren zur Überwachung der Sicherheit der Übertragung von Datenpaketen nach Anspruch 10,
**dadurch gekennzeichnet, dass** der Response-Filter (6) stets aktiv ist.

12. Verfahren zur Überwachung der Sicherheit der Übertragung von Datenpaketen nach einem der Ansprüche 10-11,
**dadurch gekennzeichnet, dass** bei Ablehnung des Response-Paktes (5) die Bestätigung des Erhalts des Response-Paktes (5) vom ersten Datenverarbeitungsmittel (1) an das zweite Datenverarbeitungsmittel entfällt.

13. Verfahren zur Überwachung der Sicherheit der Übertragung von Datenpaketen nach einem der Ansprüche 10-12,
**dadurch gekennzeichnet, dass** das zweite Datenverarbeitungsmittel mittels eines Servers, insbesondere eines Syslog-Servers oder eines Syslog-ng-Servers oder eines Rsyslog-Servers oder eines SIEM- Servers (2), mit dem ersten Datenverarbeitungsmittel (1) kommuniziert.

14. Verfahren zur Überwachung der Sicherheit der Übertragung von Datenpaketen nach einem der vorhergehenden Ansprüche 10-13, **dadurch gekennzeichnet, dass** das erste Datenverarbeitungsmittel (1) mittels eines Transmission Control Protocols (TCP) mit dem zweiten Datenverarbeitungsmittel kommuniziert.

## Claims

1. Automation network for monitoring the security of the transfer of data packets, comprising at least one first data processing means (1), which is provided to transfer data packets from an installation component and into an installation component and a second data processing means, wherein at least the first data processing means (1) is bidirectionally connected to the second data processing means in order to transfer the data packets with one another, wherein when a data packet is transmitted from a first data processing means (1) to the second data processing means, these are detected by the second data processing means and response packets (5) are generated, which are sent back from the second data processing means to the first data processing means (1),
wherein the first data processing means (1) comprises a response filter (6), with which a check and subsequent rejection/acceptance of the response packets (5) can be performed,
wherein with a rejection of a response packet (5), a warning signal (7) is output on a service device.

2. Automation network for monitoring the security of the transfer of data packets according to claim 1,
**characterised in that** the second data processing means for communication with the first data processing means (1) comprises a server.

3. Automation network for monitoring the security of the transfer of data packets according to claim 2,
**characterised in that** the server is a Syslog server or a Syslog-ng server or a Rsyslog server.

4. Automation network for monitoring the security of the transfer of data packets according to claim 2,
**characterised in that** the server is a SIEM server (2).

5. Automation network for monitoring the security of the transfer of data packets according to one of the preceding claims,
**characterised in that** the first data processing means (1) for communication with the second data processing means comprises a TCP-based client.

6. Automation network for monitoring the security of the transfer of data packets according to claim 5,
**characterised in that** the TCP-based client comprises a protocol stack and the response filter (6) is provided in the protocol stack.

7. Automation network for monitoring the security of the transfer of data packets according to one of the preceding claims,
**characterised in that** assumed response packets (5) are embodied at least as synchronization packets and/or finish packets and/or acknowledgment packets (4).

8. Automation network for monitoring the security of the transfer of data packets according to one of the preceding claims,
**characterized in that** the data packets are security events.

9. Automation network for monitoring the security of the transfer of data packets according to one of the preceding claims,
**characterized in that** a firewall for checking the data packets is provided at least in the first data processing means (1).

10. Method for monitoring the security of the transfer of data packets in an automation network, having at least one first data processing means (1), which is provided to transfer data packets from a system component and into a system component and a second data processing means, wherein at least the first data processing means (1) is bidirectionally connected to the second data processing means in order to transfer the data packets with one another, wherein when a data packet is transmitted from a first data processing means (1) to the second data processing means, these are detected by the second data processing means and response packets (5) are generated, which are sent back from the second data processing means to the first data processing means (1),
wherein a check and subsequent rejection/acceptance of the response packets (5) is performed by a response filter (6) provided in the first data processing means (1) so that a reaction-free transmission is enabled, wherein with a rejection of a response packet (5), a warning signal (7) which is displayed on a service device is generated.

11. Method for monitoring the security of the transfer of data packets according to claim 10,
**characterised in that** the response filter (6) is constantly active.

12. Method for monitoring the security of the transfer of data packets according to one of claims 10 - 11, **characterised in that** with the rejection of the response packet (5) the confirmation of the receipt of the response packet (5) from the first data processing means (1) to the second data processing means is omitted.

13. Method for monitoring the security of the transfer of data packets according to one of claims 10 to 12,
**characterised in that** the second data processing means communicates with the first data processing means (1) by means of a server, in particular a Syslog server or a Syslog-ng server or a Rsyslog server or a SIEM server (2).

14. Method for monitoring the security of the transfer of data packets according to one of the preceding claims 10 to 13,
**characterised in that** the first data processing means (1) communicates with the second data processing means by means of a transmission control protocol (TCP).

## Revendications

1. Réseau d'automatisation pour contrôler la sécurité de la transmission de paquets de données, comprenant au moins un premier moyen (1) de traitement de données, prévu pour transmettre des paquets de données d'un composant d'installation et à un composant d'installation et un deuxième moyen de traitement de données, dans lequel au moins le premier moyen (1) de traitement de données est relié au deuxième moyen de traitement de données bidirectionnellement pour la transmission des paquets de données entre eux, dans lequel, lors de la transmission d'un paquet de données du premier moyen (1) de traitement de données au deuxième moyen de traitement de données, ce paquet est détecté par le deuxième moyen de traitement de données et il est produit des paquets (5) de réponse qui sont renvoyés du deuxième moyen de traitement de données au premier moyen (1) de traitement de données,
dans lequel le premier moyen de traitement de données comprend un filtre (6) de réponse, par lequel un contrôle et ensuite un reçu/une acceptation des paquets (5) de réponse peut être effectué,
dans lequel, lors du reçu d'un paquet (5) de réponse, un signal (7) d'avertissement peut être produit pour émission sur un appareil de service.

2. Réseau d'automatisation pour contrôler la sécurité de la transmission de paquets de données suivant la revendication 1,
**caractérisé en ce que**
le deuxième moyen de traitement de données comprend un serveur pour la communication avec le premier moyen (1) de traitement de données.

3. Réseau d'automatisation pour contrôler la sécurité de la transmission de paquets de données suivant la revendication 2,
**caractérisé en ce que**
le serveur est un serveur Syslog ou un serveur Syslog-ng ou un serveur Rsyslog.

4. Réseau d'automatisation pour contrôler la sécurité de la transmission de paquets de données suivant la revendication 2,
**caractérisé en ce que**
le serveur est un serveur (2) SIEM.

5. Réseau d'automatisation pour contrôler la sécurité de la transmission de paquets de données suivant l'une des revendications précédentes,
**caractérisé en ce que**
le premier moyen (1) de traitement de données comprend un client basé sur TCP pour la communication avec le deuxième moyen de traitement de données.

6. Réseau d'automatisation pour contrôler la sécurité de la transmission de paquets de données suivant la revendication 5,
**caractérisé en ce que**
le client basé sur TCP comprend une pile journal et le filtre (6) de réponse est prévu dans la pile journal.

7. Réseau d'automatisation pour contrôler la sécurité de la transmission de paquets de données suivant l'une des revendications précédentes,
**caractérisé en ce que**
des paquets (5) de réponse acceptés sont conformés au moins sous la forme de paquets de synchronisations et/ou de paquets finish et/ou de paquets (4) d'accusés de réception.

8. Réseau d'automatisation pour contrôler la sécurité de la transmission de paquets de données suivant l'une des revendications précédentes,
**caractérisé en ce que**
les paquets de données sont des security-events.

9. Réseau d'automatisation pour contrôler la sécurité de la transmission de paquets de données suivant l'une des revendications précédentes,
**caractérisé en ce qu'**
au moins dans le premier moyen (1) de traitement de données est prévu un firewall pour contrôler les paquets de données.

10. Procédé de contrôle de la sécurité de la transmission de paquets de données dans un réseau d'automatisation, comprenant au moins un premier moyen (1) de traitement de données, prévu pour transmettre des paquets de données d'un composant d'installation et à un composant d'installation et un deuxième moyen de traitement de données, dans lequel au moins le premier moyen (1) de traitement de données est relié au deuxième moyen de traitement de données bidirectionnellement pour la transmission des paquets de données entre eux, dans lequel, lors de la transmission d'un paquet de données du premier moyen (1) de traitement de données au deuxième moyen de traitement de données, ce paquet est détecté par le deuxième moyen de traitement de données et il est produit des paquets (5) de réponse, qui sont renvoyés du deuxième moyen de traitement de données au premier moyen (1) de traitement de données,
dans lequel il est effectué un contrôle et ensuite un reçu/une acceptation des paquets (5) de réponse, par un filtre (6) de réponse prévu dans le premier moyen (1) de traitement de données, de manière à rendre possible un envoi sans réaction, dans lequel, lors du reçu d'un paquet de réponse, on produit un signal (7) d'avertissement, qui est apporté pour affichage à un appareil de service.

11. Procédé de contrôle de la sécurité de la transmission de paquets de données suivant la revendication 10,
**caractérisé en ce que**
le filtre (6) de réponse est toujours actif.

12. Procédé de contrôle de la sécurité de la transmission de paquets de données suivant l'une des revendications 10 à 11,
**caractérisé en ce que**,
lors d'un reçu du paquet (5) de réponse, la confirmation du contenu du paquet (5) de réponse du premier moyen de traitement de données au deuxième moyen de traitement de données est supprimée.

13. Procédé de contrôle de la sécurité de la transmission de paquets de données suivant l'une des revendications 10 à 12,
**caractérisé en ce que**
le deuxième moyen de traitement de données communique au moyen d'un serveur, notamment d'un serveur Syslog ou d'un serveur Syslog-ng ou d'un serveur Rsyslog ou d'un serveur (2) SIEM, avec le premier moyen (1) de traitement de données.

14. Procédé de contrôle de la sécurité de la transmission de paquets de données suivant l'une des revendications 10 à 13 précédentes,
**caractérisé en ce que**
le premier moyen (1) de traitement de données communique avec le deuxième moyen de traitement de données, à l'aide d'un transmission control protocol (TCP).
